# EUROPEAN PATENT APPLICATION

(11) **EP 1 782 909 A1**
(43) Date of publication of application: **09.05.2007**
(21) Application number: 06122245.1
(22) Date of filing: 13.10.2006
(51) Int. Cl.: B23K 11/11, B23K 11/31

(54) **Spot welder with variable configuration**

(30) Priority: 02.11.2005 IT BO20050670
(71) Applicant: TECNA S.p.A., 40024 Castel San Pietro Terme (Bologna) (IT)
(72) Inventor: Amadori, Ezio, 40024 Castel S. Pietro Terme (BO) (IT); Parenti, Luca, 40068 S. Lazzaro di Savena (BO) (IT)
(74) Representative: Modiano, Micaela Nadia

(57) **Abstract**

A spot welder with variable configuration, comprising at least one support (2) for a first electrode holder (3) and for a second electrode holder (4), of which at least one is associated with at least one linear actuator (5) suitable to move mutually closer and space cyclically said first and second electrode holders (3, 4), so as to perform spot welding on parts which are interposed between respective first and second electrodes (6, 7), the support (2) comprising at least one first portion (10), with which the first electrode holder (3) is associated, and at least one second portion (11), with which the second electrode holder (4) is associated, the second portion (11) being articulated to the first portion (10) and elements (12) being provided for selectively locking the second portion (11) with respect to the first portion (10), so as to provide, at the user's discretion, both a so-called C-type working configuration, in which the second portion (11) is rigidly coupled to the first portion (10) and in which the second electrode holder (4) can be actuated so as to perform a bidirectional translational motion with respect to the first electrode holder (3) and to the second portion (11), so as to move mutually closer and mutually apart the first and second electrodes (6, 7), and a so-called X-type working configuration, in which the second portion (11) can rotate with respect to the first portion (10) and the second electrode holder (4) is rigidly coupled to the second portion (11) and can be actuated so as to rotate in both directions with respect to the first electrode holder (3) so as to move the first and second electrodes (6, 7) mutually closer and further apart.

## Description

The present invention relates to a spot welder with variable configuration.

In some manufacturing processes it is known that certain spot welding operations, for example due to the orientation of the parts to be welded or due to various other functional reasons, must be performed by means of spot welders which work with the so-called C-type configuration, i.e., a configuration in which a straight electrode holder is actuated so as to perform a translational motion along its own longitudinal axis with respect to the other electrode holder, whose shape is bent and substantially normal to the longitudinal axis.

To perform other spot welding operations, instead, it is necessary to use welders which operate with the so-called X-type (or L-type) configuration, in which typically the two electrode holders are mutually articulated and at least one is actuated so as to turn with respect to the other in an approaching motion until contact occurs, followed by mutual spacing.

It is therefore evident that in order to perform all the welding operations required in a production process, it is currently necessary to have both welders with a C-type configuration and welders with an X-type (or L-type) configuration, with high costs for who performs the process, not to mention the maintenance costs of such equipment.

The aim of the present invention is to obviate the above mentioned drawbacks, by providing a spot welder which is extremely versatile in use, i.e., is suitable to weld parts both in the so-called C-type working configuration and in the X-type (or L-type) configuration.

Within this aim, an object of the present invention is to provide a spot welder which can be moved rapidly and simply from a C-type configuration to an X-type (or L-type) configuration and vice versa, with the minimum expenditure of time and work on the part of the assigned operators by replacing the pair of electrode holders.

Another object of the present invention is to provide a spot welder with a structure which is simple, relatively easy to provide in practice, safe in use, effective in operation, and has a relatively low cost.

This aim and these and other objects that will become better apparent hereinafter are achieved by the present spot welder with variable configuration, which comprises at least one support for a first electrode holder and for a second electrode holder, of which at least one is associated with at least one linear actuator suitable to move mutually closer and space cyclically said first and second electrode holders, so as to perform spot welding on parts which are interposed between respective first and second electrodes, characterized in that said support comprises at least one first portion, with which said first electrode holder is associated, and at least one second portion, with which said second electrode holder is associated, said second portion being articulated to said first portion and elements being provided for selectively locking said second portion with respect to said first portion, so as to provide, at the user's discretion, both a so-called C-type working configuration, in which said second portion is rigidly coupled to said first portion and in which said second electrode holder can be actuated so as to perform a bidirectional translational motion with respect to said first electrode holder and to said second portion, so as to move mutually closer and mutually apart said first and second electrodes, and a so-called X-type working configuration, in which said second portion can rotate with respect to said first portion and said second electrode holder is rigidly coupled to said second portion and can be actuated so as to rotate in both directions with respect to said first electrode holder so as to move said first and second electrodes mutually closer and further apart.

Further characteristics and advantages of the present invention will become better apparent from the following detailed description of a preferred but not exclusive embodiment of a spot welder with variable configuration, particularly of the pneumatically- or electrically-operated type according to the invention, illustrated by way of non-limiting example in the accompanying drawings, wherein:
Figure 1 is a side elevation view of the welder according to the invention in the C-type working configuration, with the first and second electrode holders mutually spaced;
Figure 2 is a perspective view of the welder in the C-type working configuration, with the first and second electrode holders mutually spaced;
Figure 3 is a perspective view of the welder in the C-type working configuration, with the first and second electrode holders mutually close;
Figure 4 is a side elevation view of the welder according to the invention in the X-type (or L-type) working configuration, with the first and second electrode holders mutually close;
Figure 5 is a perspective view of the welder in the X-type (or L-type) working configuration, with the first and second electrode holders mutually close;
Figure 6 is a side elevation view of the welder in the X-type (or L-type) working configuration, with the first and second electrode holders mutually spaced.

In the exemplary embodiment that follows, individual characteristics may actually be interchanged with other different characteristics that exist in other exemplary embodiments.

Moreover, it is noted that anything found to be already known during the patenting process is understood not to be claimed and to be the subject of a disclaimer.

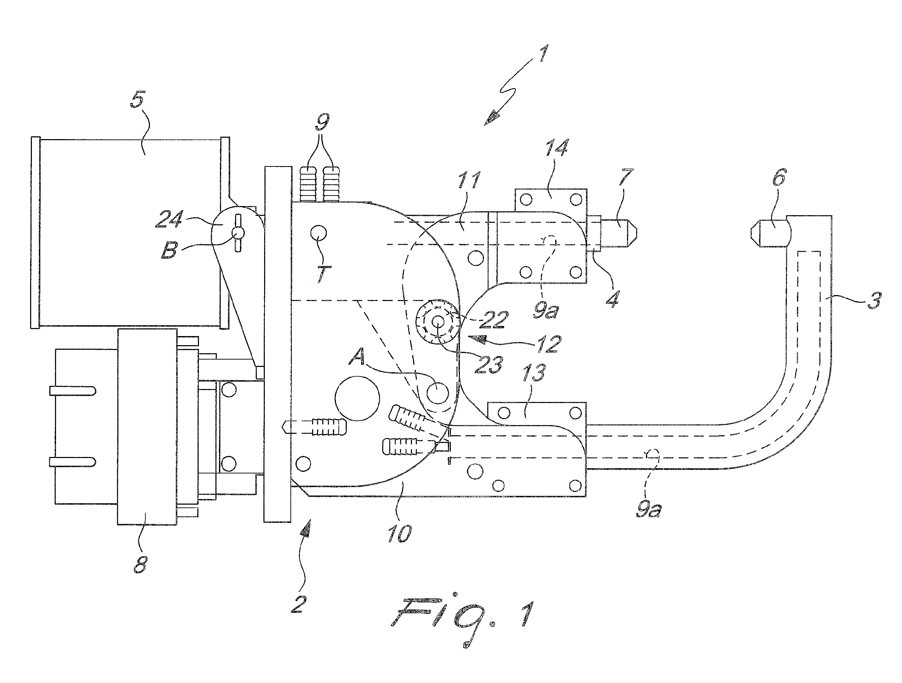

With reference to Figure 1, the reference numeral 1 generally designates a spot welder with variable configuration according to the invention.

The welder described hereinafter is preferably but not exclusively suitable for use in the industrial field for welding work of the most disparate types and for the most disparate applications, without any limitation.

The spot welder 1 comprises at least one support, generally designated by the reference numeral 2 and suitable for fixing to fixed parts of the welding apparatus, for a first electrode holder 3 and a second electrode holder 4, of which at least one, and specifically the second electrode holder 4, is associated with a linear actuator 5. The linear actuator 5 is conveniently of the type which is suitable to cyclically move mutually closer and further apart the first electrode holder 3 and the second electrode holder 4, so as to perform spot welding on parts (not shown) which are interposed between the first electrode 6 and the second electrode 7 and are fixed respectively to the first electrode holder 3 and to the second electrode holder 4.

At least one electric transformer 8 for supplying power to the electrodes is associated directly with the support 2; this solution allows to minimize the energy consumption due to voltage drops along the cables.

Further, the welder is provided with a traditional water cooling system for the electrode holders 3 and 4, said water being circulated through the connectors 9 and the cavities 9a provided in said electrode holders.

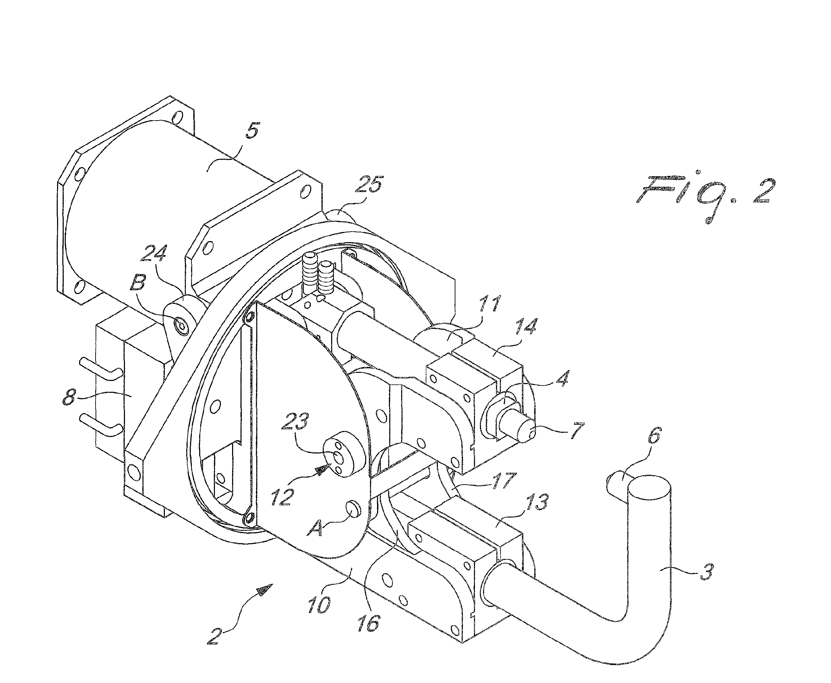

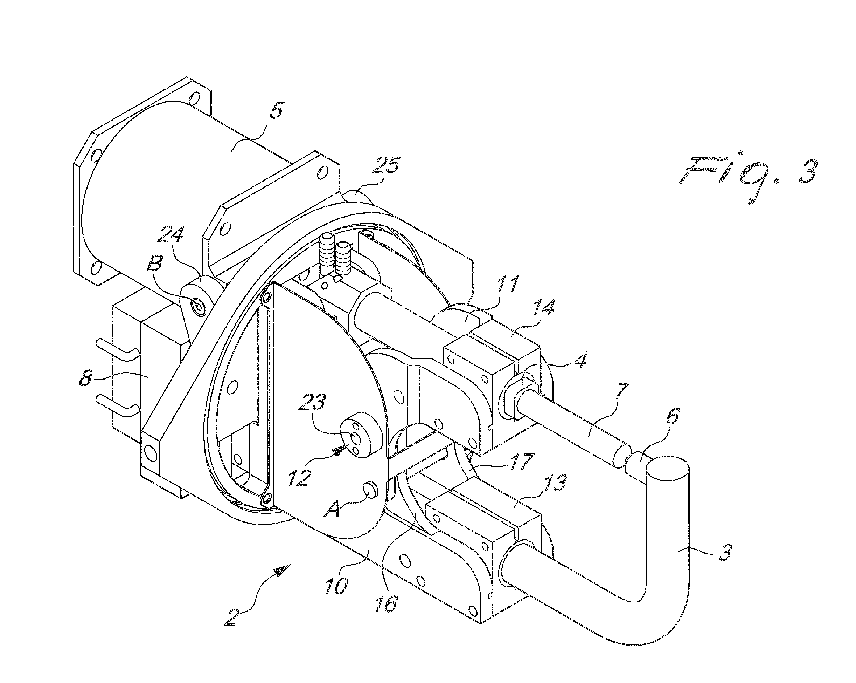

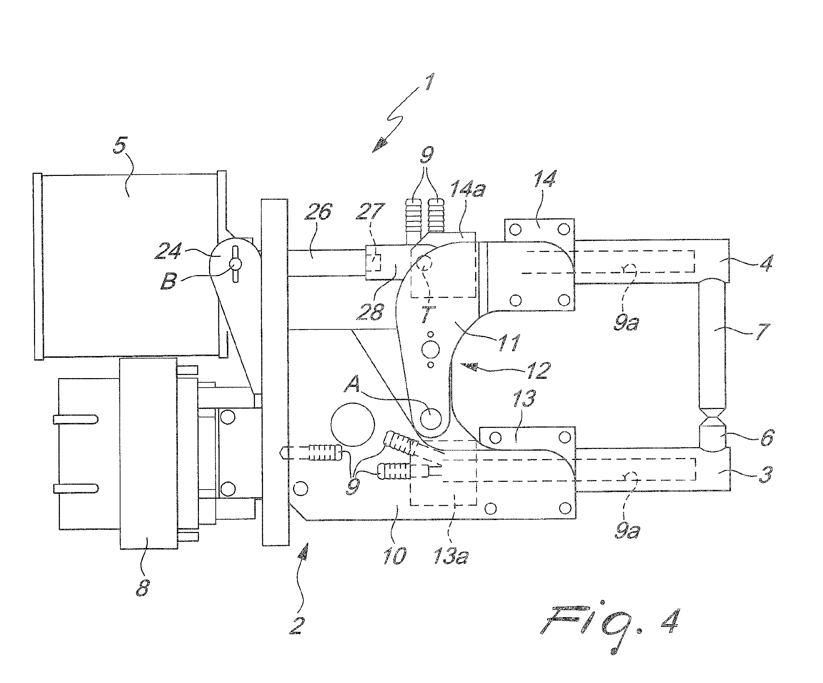

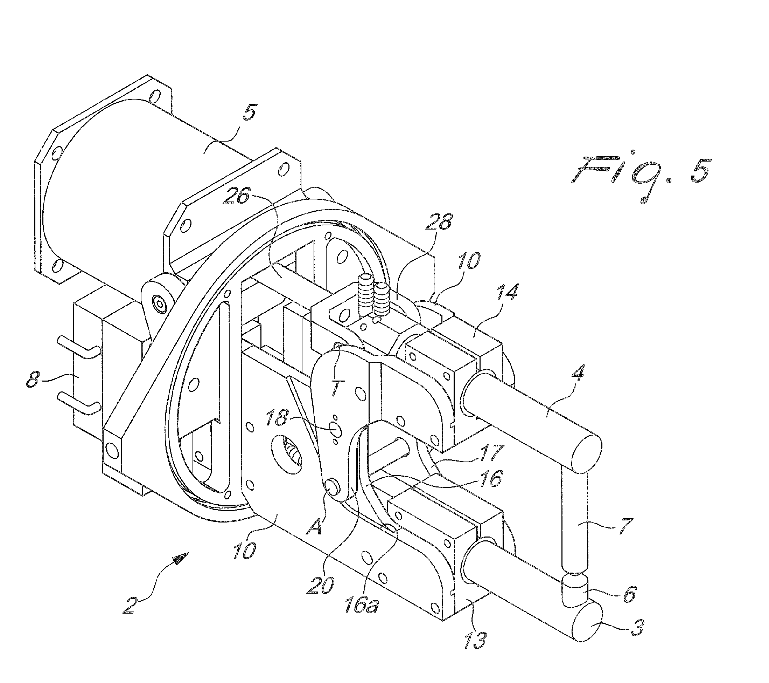

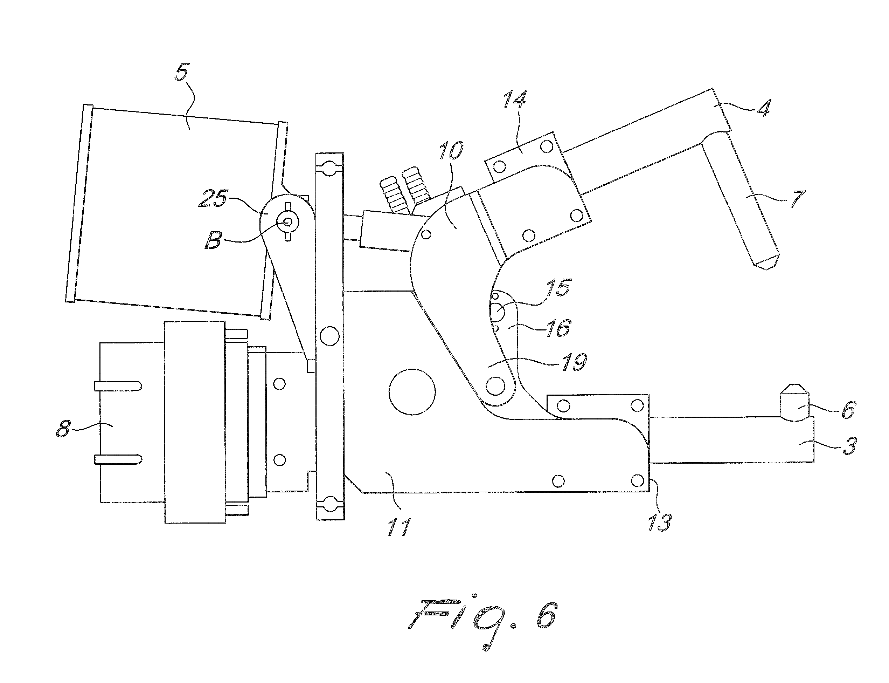

According to the invention, the support 2 of the welder comprises advantageously at least one first portion 10, with which the first electrode holder 3 is associated, and at least one second portion 11, with which the second electrode holder 4 is associated: the second portion 11 is articulated to the first portion 10 on a first axis A. Advantageously, elements, generally designated by the reference numeral 12, for locking selectively the second portion 11 with respect to the first portion 10 are provided so as to obtain, at the user's discretion, both a so-called C-type working configuration (Figures 1, 2, 3) and a so-called X-type working configuration (Figures 4, 5, 6). In the so-called C-type configuration, the second portion 11 is rigidly coupled to the first portion 10 and the second electrode holder 4 can be actuated by the linear actuator 5 so as to perform a bidirectional translational motion with respect to the second portion 11 and the first electrode holder 3, so as to move mutually closer (Figure 3) and mutually apart (Figures 1 and 2) the first electrode 6 and the second electrode 7 in order to provide the spot welds. In the so-called X-type working configuration, instead, the second portion 11 can rotate with respect to the first portion 10 and the second electrode holder 4 is rigidly coupled to the second portion 11 and can be actuated by the linear actuator 5 so as to rotate in both directions, with respect to the first electrode holder 3, so as to move mutually closer (Figures 4 and 5) and mutually apart (Figure 6) the first electrode 6 and the second electrode 7 in order to provide the spot welds.

Each of the two working configurations (C-type or X-type) uses electrode holders 3 and 4 which have different shapes and must be replaced whenever it is necessary to shift from one working configuration to the other. For this purpose, the electrode holders 3, 4 of the welder according to the invention can be replaced quickly, as will become better apparent hereinafter.

The C-type working configuration (Figures 1, 2, 3) uses a first electrode holder 3, which is curved so as to be substantially normal to the longitudinal axis, the first electrode 6 being arranged at right angles thereto, and a second electrode holder 4, which is substantially straight and to which the second electrode 7 is coaxial.

In the X-type working configuration, instead (Figures 4, 5, 6), the first electrode holder 3 is substantially straight, with the first electrode 6 at right angles thereto, and the second electrode holder 4 is also substantially straight, with the second electrode 7 at right angles thereto.

The first portion 10 of the support 2 supports rigidly (for example by fixing by means of screws) a respective first terminal 13 for fixing the first electrode holder 3 and a first current carrying terminal 13a; likewise, the second portion 11 rigidly supports a respective second terminal 14 for fixing the second electrode holder 4 and a second current carrying terminal 14a. As will become better apparent hereinafter, the second terminal 14 is clamped by means of screws onto the second electrode holder 4 in the X-type working configuration of the welder, and is conveniently adjusted so as to compensate for any play in the C-type working configuration so as to allow the second electrode holder 4 to slide freely inside it.

Conveniently, the elements 12 for selectively locking the second portion 11 with respect to the first portion 10 of the support comprise two first through holes 15, which are mutually coaxial and are provided in two ribs 16 and 17, which are flat and parallel and are formed by the first portion 10 (said ribs form respective stroke limiting surfaces 16a, 17a for the rotation of the second portion 11); two second through holes 18, which are provided in two respective lugs 19, 20 of the second portion 11; and at least one pin 21, which has an actuation head 22 (for manual grip) and an axial terminal locking portion 23 provided by means of a thread, a cam or others, which can be inserted selectively by hand in the first and second through holes 15, 18, which are arranged coaxially, and can further be extracted selectively by hand at the user's discretion.

With the pin 21 inserted in the first and second through holes 15 and 18, which are arranged coaxially by the operator, the second portion 11 is rigidly coupled to the first portion 10, so as to obtain the C-type working configuration; with the pin 21 extracted from the first and second through holes 15, 18, instead, the second portion 11 can rotate freely about the first axis A with respect to the first portion 10, so as to obtain the typical X-type working configuration.

The linear actuator 5, in order to allow the actuation of the second electrode holder 4 in the C-type working configuration, is articulated to the first portion 10 of the support 2 at a second axis B which is supported rotatably by two eyelets 24 and 25; the linear actuator 5 further has a stem 26 in which the tip 27 is articulated to the second electrode holder 4, on a third axis T which is constituted by a fork 28.

Preferably but not exclusively, the linear actuator 5 is of the pneumatic double-acting type, in order to move mutually closer and further apart actively the first electrode holder 3 and the second electrode holder 4. The linear actuator 5 is of course associated with pneumatic or electric power supply means, which are not shown in the figures and are of a substantially traditional type.

The method of use of the welder according to the invention is now intuitive. In the C-type working configuration, shown in Figures 1, 2 and 3, the pin 21 is inserted in the first through holes 15 and in the second through holes 18, so as to lock the second portion 11 with respect to the first portion 10; the second terminal 14 is adjusted so that it can slide and therefore the second electrode holder 4 is free to slide bidirectionally and coaxially with respect to the stem 26 of the linear actuator 5. The pin 21 is kept in position for example by means of a screw which is screwed into the threaded end portion 23 or by virtue of other equivalent means.

In order to obtain an X-type working configuration, it is instead necessary to replace the first and second electrode holders 3 and 4, by loosening the first terminal 13 and the second terminal 14, loosen also the current carrying terminals 13a, 14a, remove the pin 21 from the first and second through holes 15 and 18, thus disengaging the second portion 11 from the first portion 10, and tighten all the terminals 13, 13a, 14, 14a on the first and second electric holders 3 and 4 which have been replaced. The second portion 11, by way of the kinematic chain that has thus been formed, can now be actuated so as to rotate, by the linear actuator 5, about the first axis A in both directions (by means of extension and retraction strokes of the stem 26), so as to cyclically move mutually closer and further apart the second electrode 7 with respect to the first electrode 6, providing the spot welds.

It has thus been found that the invention achieves the intended aim and objects.

The welder according to the invention allows to shift in a few minutes, with a few simple operations, from a C-type working configuration to an X-type (or L-type) working configuration and vice versa, without therefore requiring two distinct and dedicated devices.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. BO2005A000670 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A spot welder with variable configuration, comprising at least one support (2) for a first electrode holder (3) and for a second electrode holder (4), of which at least one is associated with at least one linear actuator (5) suitable to move mutually closer and space cyclically said first and second electrode holders (3, 4), so as to perform spot welding on parts which are interposed between respective first and second electrodes (6, 7), **characterized in that** said support (2) comprises at least one first portion (10), with which said first electrode holder (3) is associated, and at least one second portion (11), with which said second electrode holder (4) is associated, said second portion (11) being articulated to said first portion (10) and elements (12) being provided for selectively locking said second portion (11) with respect to said first portion (10), so as to provide, at the user's discretion, both a so-called C-type working configuration, in which said second portion (11) is rigidly coupled to said first portion (10) and in which said second electrode holder (4) can be actuated so as to perform a bidirectional translational motion with respect to said first electrode holder (3) and to said second portion (11), so as to move mutually closer and mutually apart said first and second electrodes (6, 7), and a so-called X-type working configuration, in which said second portion (11) can rotate with respect to said first portion (10) and said second electrode holder (4) is rigidly coupled to said second portion (11) and can be actuated so as to rotate in both directions with respect to said first electrode holder (3) so as to move said first and second electrodes (6, 7) mutually closer and further apart.

2. The welder according to the preceding claim, **characterized in that** said selective locking elements (12) comprise at least one first through hole (15), which is provided in said first portion (10), at least one second through hole (18), which is provided in said second portion (11), and at least one pin (21), which can be inserted selectively by hand in said first and second through holes (15, 18) and can also be manually extracted selectively, with said pin (21) inserted in said first and second through holes (15, 18), which are arranged coaxially, said second portion (11) being rigidly coupled to said first portion (10) so as to obtain a C-type working configuration, with said pin (21) extracted from said first and second through holes (15, 18) said second portion (11) being instead able to rotate freely with respect to said first portion (10) so as to obtain an X-type working configuration.

3. The welder according to claims 1 and 2, **characterized in that** said linear actuator (5) is articulated to said first portion (10) and the tip (27) of its stem (26) is articulated to said second electrode holder (4).

4. The welder according to one or more of the preceding claims, **characterized in that** said linear actuator (5) is of the pneumatic type.

5. The welder according to one or more of the preceding claims, **characterized in that** said linear actuator (5) is of the electrical type.

6. The welder according to one or more of the preceding claims, **characterized in that** said first electrode holder (3) and said second electrode holder (4) are removable and are of the kind for the C-type working configuration.

7. The welder according to claim 6, **characterized in that** said first electrode holder (3) is curved substantially normal to the longitudinal axis, with said first electrode (6) at right angles thereto, and **in that** said second electrode holder (4) is substantially straight, with said second electrode (7) coaxial to the latter.

8. The welder according to claims 1 and 2, **characterized in that** said first electrode holder (3) and said second electrode holder (4) are removable and are of the kind for an X-type working configuration.

9. The welder according to claim 8, **characterized in that** said first electrode holder (3) and said second electrode holder (4) are substantially straight, with said first electrode (6) and said second electrode (7) substantially perpendicular thereto.

10. The welder according to one or more of the preceding claims, **characterized in that** said first portion (10) is affected by a pair of said first through holes (15), which are mutually coaxial.

11. The welder according to one or more of the preceding claims, **characterized in that** said second portion (11) is affected by two of said second through holes (18), which are mutually coaxial.

12. The welder according to one or more of the preceding claims, **characterized in that** said first portion (10) is provided with a respective first terminal (13) for the fixing of said first electrode holder (3).

13. The welder according to one or more of the preceding claims, **characterized in that** said second portion (11) is provided with a respective second terminal (14) for fixing said second electrode holder (4).

14. The welder according to one or more of the preceding claims, **characterized in that** said second terminal (14) is clamped onto said second electrode holder (4) in the X-type working configuration, and is adjusted so that it can slide in the C-type working configuration so as to allow the free sliding therein of said second electrode holder (4).

15. The welder according to one or more of the preceding claims, **characterized in that** said pin (21) has an actuation head (22) and an axial locking end portion (23) for fixing it inside said first and second through holes (15, 18).
